# EUROPEAN PATENT APPLICATION

(11) **EP 4 697 006 A1**
(43) Date of publication of application: **18.02.2026**
(21) Application number: 24788572.6
(22) Date of filing: 27.03.2024
(51) Int. Cl.: G01N 1/40, G01N 35/00

(54) **EVAPORATION CONCENTRATION MECHANISM AND AUTOMATIC ANALYSIS DEVICE INCLUDING SAME**

(30) Priority: 10.04.2023 JP 2023063141
(71) Applicant: HITACHI HIGH-TECH CORPORATION, Tokyo 105-6409 (JP)
(72) Inventor: SUMITOMO Takayuki, Tokyo 105-6409 (JP); ITO Takumi, Tokyo 105-6409 (JP); MATSUOKA Shinya, Tokyo 105-6409 (JP); ITO Mayuko, Tokyo 105-6409 (JP)
(74) Representative: Strehl & Partner mbB
(86) International application number: PCT/JP2024/012486
(87) International publication number: WO 2024/214544

(57) **Abstract**

There is provided an evaporation and concentration mechanism capable of adjusting an evaporation amount of a liquid by an inexpensive and simple mechanism, and an automatic analyzer having the evaporation and concentration mechanism. An aspiration unit 310 includes: a discharge flow path 314 that has one end thereof connected to a discharge unit 320 and the other end thereof connected to an opening of a reaction vessel due to a contact between the aspiration unit and the reaction vessel; and a through hole 312 that allows an outside air to flow into the reaction vessel. The discharge unit includes: a negative pressure generating source 321 that generates a negative pressure; a discharge pipe 324 that connects the negative pressure generating source and the discharge path of the aspiration unit to each other; and an atmospheric air introducing portion 322 that introduces an atmospheric air to the discharge pipe. The atmospheric air introducing pipe 323 is detachably mounted on the atmospheric air introducing portion.

## Description

### Technical Field

This invention relates to an evaporation and concentration mechanism and an automatic analyzer having the evaporation and concentration mechanism.

### Background Art

As a method for analyzing specific components contained in a sample, there is, for example, a method of using LC-MS, which connects a liquid chromatography (LC) and a mass spectrometry (MS) online.

The use of LC-MS is expanding into the field of clinical testing, in which analysis of a biological sample such as blood and urine is performed by an automatic analyzer. When analyzing a biological sample (hereinafter simply referred to as "sample") such as blood and urine using LC-MS, it is necessary to perform pretreatment to improve a degree of refinement of the samples. Components to be analyzed included in the sample are extracted by a method such as, for example, the solid phase extraction (SPE) or the liquid-liquid extraction (LLE). Furthermore, in order to realize high-sensitive detection by LC-MS, evaporation and concentration may be performed which concentrates the components to be analyzed by evaporating an extracted solution obtained by extracting the components to be analyzed.

As the techniques for performing evaporation and concentration of such sample, Patent Literatures 1 and 2 are known, for example. In an evaporation process disclosed in Patent Literature 1, a reaction vessel retaining a sample solution is connected to a depressurization source via a depressurization channel, and a concentration process is performed by depressurizing inside the reaction vessel. Patent Literature 2 discloses a stopper for removing a volatile substance preferrable to vaporize and remove a volatile substance from a solution containing the volatile substance stored in a container. On the stopper for removing a volatile substance, a through-hole through which the vaporized volatile substance is discharged is formed, as well as a groove, at the side surface thereof, connecting between a gas inlet port positioned in an upper edge of the stopper and a gas outlet port positioned in a lower edge of the stopper. By the depressurization in the vessel, the volatile substance is stirred by gas blown into the container through the groove at high speed, and vaporization of the volatile substance is considered to be promoted.

### Citation List

### Patent Literature

Patent Literature 1: WO2022/185707
Patent Literature 2: WO2008/078765

### Summary of Invention

### Technical Problem

The automatic analyzer is used in various environments. For example, when used in areas with high altitude, because the atmospheric pressure is lower compared to flat ground, the boiling point is lower and evaporation is easier, which may cause the amount of evaporation to exceed a designed value. Patent Literature 1 discloses controlling depressurization speed in the concentration process, but a final depressurization amount is the same regardless of whether the depressurization speed is controlled, and adjustment of the evaporation amount is not considered. Also, in Patent Literature 2 also does not consider adjusting a vaporization amount of the volatile substance.

An object of the present invention is to provide an evaporation and concentration mechanism capable of adjusting an evaporation amount of a liquid by an inexpensive and simple mechanism, and an automatic analyzer having the evaporation and concentration mechanism.

### Solution to Problem

An evaporation and concentration mechanism according to one aspect of the present invention is an evaporation and concentration mechanism for evaporating and concentrating a liquid accommodated in a reaction vessel, and the evaporation and concentration mechanism includes: a vessel mounting unit on which the reaction vessel is placed: an aspiration unit configured to be brought into contact with the reaction vessel so as to cover an opening of the reaction vessel; and a discharge unit configured to discharge a gas in the reaction vessel by way of the aspiration unit. The aspiration unit includes: a discharge flow path that has one end thereof connected to the discharge unit and the other end thereof connected to an opening of the reaction vessel due to a contact between the aspiration unit and the reaction vessel; and a through hole that allows an outside air to flow into the reaction vessel. The discharge unit includes: a negative pressure generating source configured to generate a negative pressure; a discharge pipe configured to connect the negative pressure generating source and the discharge path of the aspiration unit to each other; and an atmospheric air introducing portion configured to introduce an atmospheric air to the discharge pipe. The atmospheric air introducing pipe is detachably mounted on the atmospheric air introducing portion. Advantageous Effects of Invention

It is possible to provide an evaporation and concentration mechanism capable of adjusting an evaporation amount by an inexpensive and simple mechanism, and an automatic analyzer having the evaporation and concentration mechanism. Objects, configurations, and effects other than the above will be apparent from the description of the following embodiments. Brief Description of Drawings

[FIG. 1] FIG. 1 is a schematic diagram showing an overall configuration of an automatic analyzer.
[FIG. 2] FIG. 2 is a diagram showing an example of a pretreatment step of an analysis process by the automatic analyzer.
[FIG. 3A] FIG. 3A is a schematic diagram showing an example of an evaporation and concentration mechanism.
[FIG. 3B] FIG. 3B is a schematic diagram showing an example of an evaporation and concentration mechanism.
[FIG. 4] FIG. 4 is a diagram showing the difference in an evaporation ratio between a case where an atmospheric air introducing pipe is connected and a case where the atmospheric air introducing pipe is not connected.
[FIG. 5] FIG. 5 is a diagram showing the difference in an evaporation ratio when a length of an atmospheric air introducing pipe is made different.
[FIG. 6] FIG. 6 is a diagram showing a relationship between the atmospheric air introducing pipe and an inflow amount of an outside air.
[FIG. 7] FIG. 7 is a schematic diagram showing a manner how an aspiration unit aspirates vapor.

### Description of Embodiments

Hereinafter, one embodiment of the present invention will be described with reference to the accompanying drawings. In the embodiments of the present invention, an automatic analyzer combining LC-MS as an analyzing mechanism for a sample pretreatment mechanism will be illustrated to describe, but the present invention can also be applied to, for example, an automatic analyzer in which a separation mechanism such as capillary electrophoresis and a detector such as an absorptiometer are combined as the analyzing mechanism.

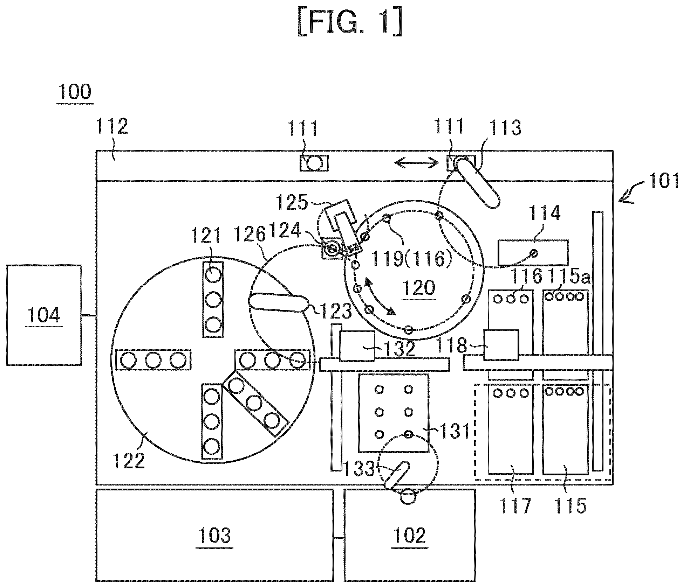

FIG. 1 is a schematic diagram showing an overall configuration of the automatic analyzer. The automatic analyzer 100 includes, as its main components: a pretreatment unit 101 for performing pretreatment of a sample; a separation unit 102 for separating components in the sample; an analyzing unit 103 for analyzing the separated components; and a control unit 104 for controlling each mechanism equipped in the automatic analyzer and analyzing and outputting the detected result by the analyzing unit 103.

The pretreatment unit 101 includes: a conveyance mechanism 112 for conveying a sample vessel 111 accommodating a sample to be analyzed to a sample dispensing position; an incubator (reaction vessel disc) 120 which allows maintaining a solution in a reaction vessel 116 at a constant temperature by mounting the reaction vessel 116 on a plurality of opening portions 119; a reagent disc 122 for retaining a plurality of reagent vessels 121 accommodating a reagent, and a sample dispensing mechanism 113 for dispensing a sample from the sample vessel 111 conveyed to the sample dispensing position to the reaction vessel 116 housed in the opening portions 119 of the incubator 120. When dispensing the sample, the sample dispensing mechanism 113 mounts a dispensing tip to avoid contamination. Attachment and detachment of the dispensing tip is performed at a dispensing tip detachably mounting unit 114. Unused dispensing tips 115a stored in a dispensing tip mounting rack 115 are conveyed to the dispensing tip detachably mounting unit 114 by a conveyance mechanism 118.

The pretreatment unit 101 includes: a magnetic separation mechanism 124 for separating magnetic beads in the solution accommodated in the reaction vessel 116 by the magnetic force of a magnet; a conveyance mechanism 125 for conveying the reaction vessel 116 between the incubator 120 and the magnetic separation mechanism 124; and an evaporation and concentration mechanism 131 for evaporating and concentrating the components to be analyzed in the solution in the reaction vessel 116.

Furthermore, the pretreatment unit 101 includes: a conveyance mechanism 132 for conveying the reaction vessel 116 between the incubator 120 and the evaporation and concentration mechanism 131; and a separation unit dispensing mechanism 133 for dispensing the solution in the reaction vessel 116 after evaporation and concentration to the separation unit 102 separating the components in the sample.

The magnetic separation mechanism 124 is mounted on a rotation trajectory 126 of the reagent dispensing mechanism 123. The reagent dispensing mechanism 123 can discharge the reagent to the reaction vessel 116 supported by the magnetic separation mechanism 124 and aspirate the solution in the reaction vessel 116.

The incubator 120 has function to keep the temperature of the reaction vessel 116 placed in the opening portion 119 constant, and incubates the reaction vessel 116 placed in the opening portion 119 for a certain time.

The separation unit 102 is the LC, for example, and has a column and the like separating the components in the reaction solution dispensed by the separation unit dispensing mechanism 133. The separation unit 102 performs separation of the components in the reaction solution dispensed from the reaction vessel 116 by the separation unit dispensing mechanism 133, and introduces the separated components to the analyzing unit 103 successively. The analyzing unit 103 is the MS, for example, and ionizes the components introduced from the separation unit 102, detects an ion amount (i.e., a component amount) and outputs the detected result to the control unit 104.

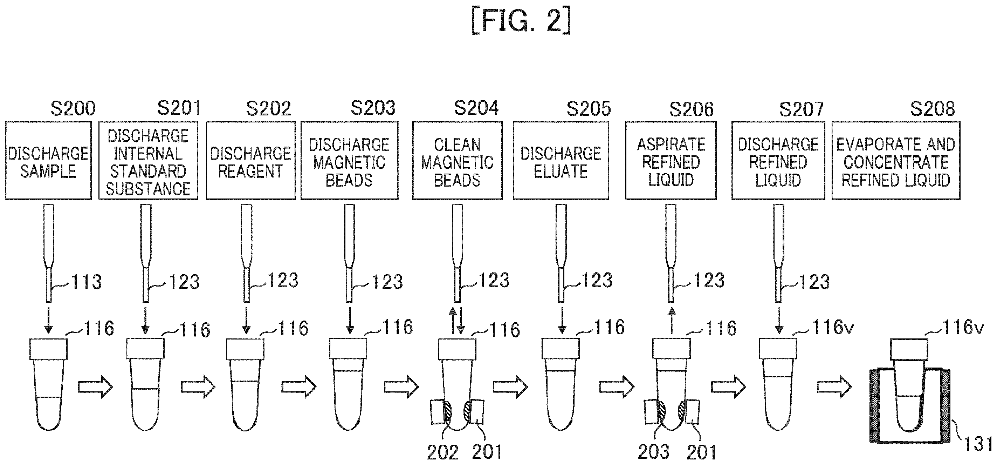

First, a basic step of an analysis process will be described. FIG. 2 is a diagram showing an example of a pretreatment step of the analysis process by the automatic analyzer 100. Prior to start the pretreatment, an unused reaction vessel 116 is preliminarily placed to the opening portion 119 on the incubator 120 from a reaction vessel mounting rack 117 by the conveyance mechanism 118.

First, a sample containing components to be analyzed is aspirated from the sample vessel 111 by the sample dispensing mechanism 113, and discharges the sample to the reaction vessel 116 of the incubator 120 (Step S200).

Next, an internal standard substance is aspirated as a reagent corresponding to the components to be analyzed from the reagent vessel 121 of the reagent disc 122 by the reagent dispensing mechanism 123, and discharged to the reaction vessel 116 (Step S201). Next, the reagent as a deproteinization agent, for example, is aspirated from the reagent vessel 121 of the reagent disc 122 by the reagent dispensing mechanism 123, and is discharged to the reaction vessel 116 (Step S202). Next, a suspension of the magnetic beads as the reagent is aspirated from the reagent vessel 121 of the reagent disc 122 by the reagent dispensing mechanism 123, and discharged to the reaction vessel 116 (Step S203).

Thereafter, the reaction vessel 116 in which the sample, the internal standard substance, the reagent, and the magnetic beads are dispensed is conveyed to the magnetic separation mechanism 124 by the conveyance mechanism 125 so as to clean the magnetic beads (Step S204).

A cleaning process of the magnetic beads will be described below. In the magnetic separation mechanism 124, by a magnetic force of a magnet 201 disposed in a position along an outer side surface of the reaction vessel 116, the magnetic beads retaining the components to be analyzed and the internal standard substance are collected to an inner wall surface of the reaction vessel 116 (shown as a group of magnetic beads 202 in FIG. 2). In this condition, the solution in the reaction vessel 116 is aspirated by the reagent dispensing mechanism 123 to be discarded. At this time, the magnetic beads and the components to be analyzed and the internal standard substance retained by the magnetic beads remains in the reaction vessel 116. Next, a cleaning liquid for cleaning contaminants other than the substance retained by the magnetic beads (the components to be analyzed and the internal standard substance) is aspirated from the reagent vessel 121 of the reagent disc 122 by the reagent dispensing mechanism 123, and discharged to the reaction vessel 116. At this time, restraint of the magnetic beads by the magnetic force of the magnet 210 may be temporarily released. Thereafter, in the condition where the magnetic beads are collected on the inner wall surface of the reaction vessel 116 by the magnet 201, the solution (cleaning liquid) in the reaction vessel 116 is aspirated and discarded by the reagent dispensing mechanism 123, thereby to clean the magnetic beads.

Next, an eluate for eluting the components to be analyzed and the internal standard substance from the group of magnetic beads 202 is aspirated, as the reagent, from the reagent vessel 121 of the reagent disc 122 by the reagent dispensing mechanism 123 to discharge the eluate to the reaction vessel 116 (Step S205).

Next, in the condition where the group of magnetic beads 203 in which the components to be analyzed and the internal standard substance are eluted are collected to the inner wall surface of the reaction vessel 116 by the magnetic force of the magnet 201, a solution (refined liquid) in the reaction vessel 116 is aspirated by the reagent dispensing mechanism 123 (Step S206), and discharged to an unused reaction vessel 116v, which is different from the reaction vessel 116 arranged in the magnetic separation mechanism 124, of the incubator 120 (Step S207). Incubation is performed, as needed, to the refined liquid accommodated in the reaction vessel 116v.

Next, the reaction vessel 116v in which the refined liquid is accommodated is conveyed to the evaporation and concentration mechanism 131 by the conveyance mechanism 132 to evaporate and concentrate the components in the refined liquid (Step S208). Detailed configuration of the evaporation and concentration mechanism 131 will be described later.

When the composition of the refined liquid is changed such that the components to be analyzed is bound to a separation column (not shown) provided in the separation unit 102, a diluted solution is aspirated from the reagent vessel 121 of the reagent disc 122 by the reagent dispensing mechanism 123 and is discharged to the reaction vessel 116v.

The refined liquid obtained by the pretreatment step above is aspirated from the reaction vessel 116v by the separation unit dispensing mechanism 133 and discharged to the separation unit 102, and the components separated at the separation unit 102 are ionized at the analyzing unit 103 to detect the ion amount (i.e., component amount). The detected result at the analyzing unit 103 is output to the control unit 104, and the control unit 104 calculates a concentration value of the components in the sample by using calibration curve.

An evaporation and concentration process in the present example will be described. The automatic analyzer 100 can adjust an evaporation amount so as to satisfy an evaporation performance required for the automatic analyzer.

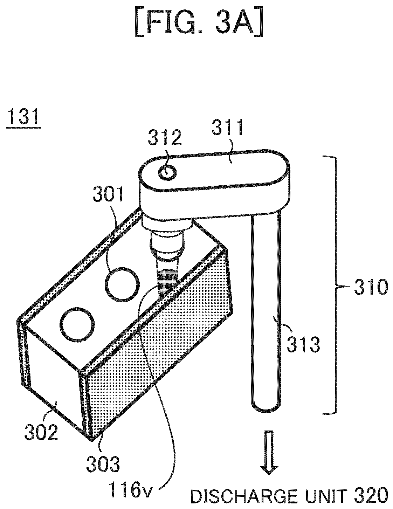

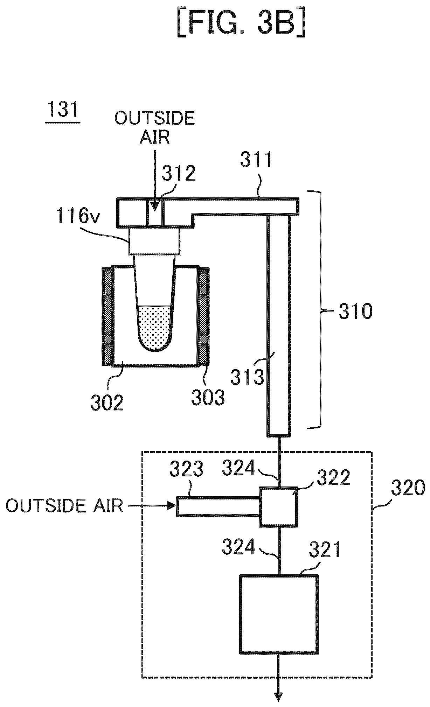

FIGS. 3A and 3B are schematic diagrams showing an example of the evaporation and concentration mechanism 131. The evaporation and concentration mechanism 131 includes: a vessel mounting unit 302 for placing the reaction vessel 116v accommodating the refined liquid obtained by the pretreatment step; and an aspiration unit 310 and a discharge unit 320 for aspirating vapor (gas) in the reaction vessel 116v.

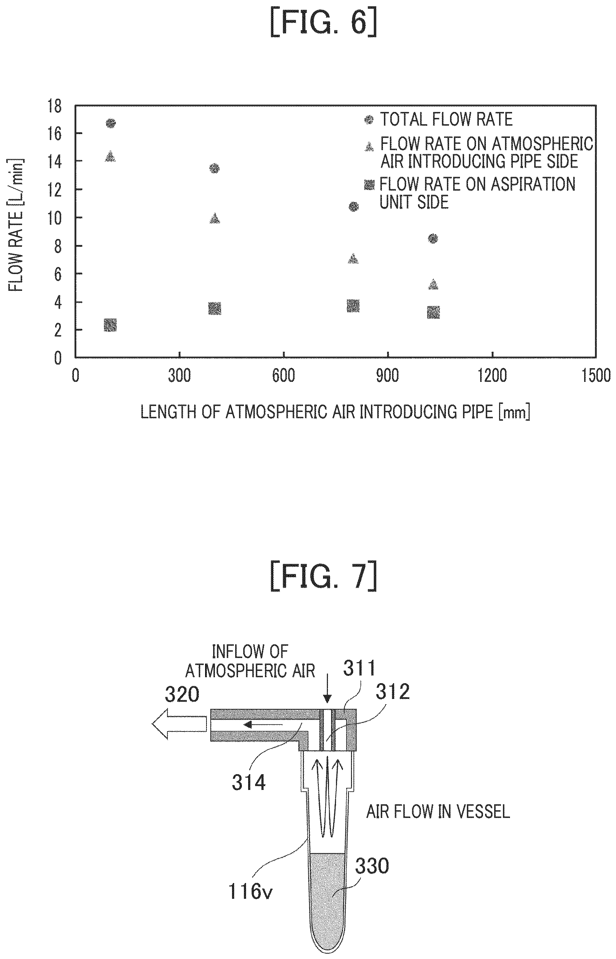

FIG. 3A shows the vessel mounting unit 302 and the aspiration unit 310 in a birds-eye view. The vessel mounting unit 302 includes one or more vessel receiving units 301 for receiving the reaction vessel 116v, and a heating unit 303 for heating the reaction vessel 116v. For the heating unit 303, a Peltier element and a heater which are capable of controlling temperature may be used. The aspiration unit 310 includes an arm 311 and a support strut 313. Inside the arm 311 and the support strut 313, a discharge flow path 314 (see FIG. 7) for aspirating vapor in the reaction vessel 116v is formed. The discharge flow path 314 is formed such that one end thereof is connected to the discharge unit 320 and the other end thereof is in contact with the arm 311 so that the arm 311 covers the reaction vessel 116v, thereby connecting to an opening of the reaction vessel 116v. Furthermore, the arm 311 is provided with a through hole 312 that allows an outside air to flow into the reaction vessel 116v at vapor aspiration.

FIG. 3B shows a configuration of the discharge unit 320. The discharge unit 320 includes: a discharge mechanism 321; and an atmospheric air introducing portion 322 for introducing the outside air provided in the middle of a discharge pipe 324 which connects the discharge flow path 314 in the aspiration unit 310 with the discharge mechanism 321. The atmospheric air introducing pipe 323 is detachably mounted on the atmospheric air introducing portion 322. It is possible to select whether or not the atmospheric air introducing pipe 323 is connected to the atmospheric air introducing portion 322, and it is also possible to prevent introducing the outside air by sealing an atmospheric air introducing pipe connecting portion of the atmospheric air introducing portion 322, without connecting the atmospheric air introducing pipe 323.

In the example of FIG. 3B, one atmospheric air introducing portion is provided and the tip of the atmospheric air introducing pipe 323 is open to atmospheric air, but not limited to this. For example, a plurality of atmospheric air introducing portions 322 may be provided, or an opening portion may be provided in the middle of the atmospheric air introducing pipe 323 to open to atmospheric air, or a plurality of opening portions may be provided to the atmospheric air introducing pipe 323. The atmospheric air introducing portion 322 may be configured as a pipe having a branch portion, such as Y-shaped pipe and T-shaped pipe, or may be configured as a block having a hole through which a gas passes. The hole provided on the block may not be a tubular as long as a gas can pass through, and may be properly selected from shapes such as triangular or square cross-sections that are easy to form. Two blocks with grooves may be joined by abutting them together. Examples of the discharge mechanism 321 may include a negative pressure generating source such as, for example, a vacuum pump such as a rotary pump, that generates negative pressure to exhaust air. Since a high degree of vacuum is not required, any types of so-called roughing pump can be applied.

When vapor is aspirated by the aspiration unit 310, condensed vapor may liquefy in the aspiration unit 310 and cause liquid dripping. Because liquid dripping into the reaction vessel decreases an evaporation and concentration rate, it is better to take measures preventing liquid dripping. For example, it is also effective to heat the aspiration unit 310 to prevent vapor from condensing on the surface of the aspiration unit. In addition, it is also effective as measures to continue performing air aspiration even after discharge is terminated and the aspiration unit 310 is separated from the reaction vessel 116v.

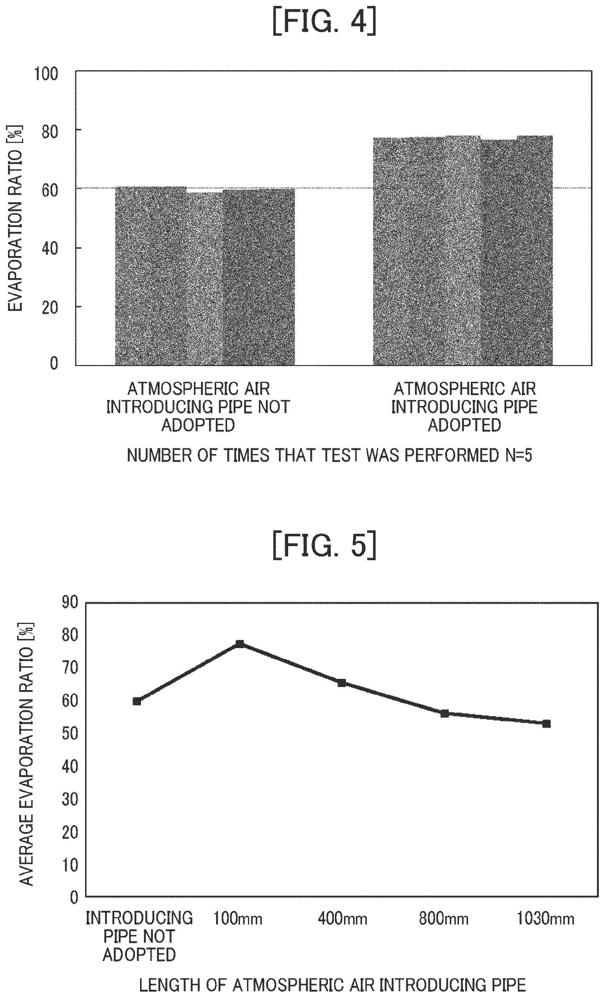

A method of adjusting the evaporation amount is described with practical examples. FIG. 4 shows results of performing evaporation and concentration of each case where the atmospheric air introducing pipe is not connected and where the atmospheric air introducing pipe is connected, in the evaporation and concentration mechanism 131 shown in FIGS. 3A and 3B. The experiments were performed under the same conditions except for the connection of the atmospheric air introducing pipe. The vertical axis represents the evaporation rate, which indicates the ratio of the volume of the evaporated sample to the volume of the sample before evaporation and concentration. In this example, it can be seen that the evaporation rate without adopting the atmospheric air introducing pipe is approximately 60%, while the evaporation rate with adopting the atmospheric air introducing pipe is a little under 80%, indicating an increase in the evaporation rate.

FIG. 5 shows results of performing evaporation and concentration while changing the length of the atmospheric air introducing pipe being connected. The vertical axis indicates the average values of the evaporation rate, which were obtained by performing multiple experiments. In the experiments, atmospheric air introducing pipes of four types of lengths (100 mm, 400 mm, 800 mm, and 1030 mm) were connected. It can be seen that the average evaporation rate is the highest when the atmospheric air introducing pipe is shortest (100 mm) and decreases as the length of the atmospheric air introducing pipe increases. Therefore, it can be understood that adjusting the evaporation rate can be made by adjusting the length of the atmospheric air introducing pipe. The change in the evaporation rate with the length of the atmospheric air introducing pipe is considered to depend on the inflow amount of the atmospheric air into the atmospheric air introducing pipe per unit time. Therefore, it is possible to adjust the evaporation rate not only by varying the length of the atmospheric air introducing pipe but also by varying the diameter of the atmospheric air introducing pipe, or the position or the number of the atmospheric air introducing portion. It is also possible to combine some of these methods of adjusting the inflow amount of the atmospheric air to adjust the evaporation rate.

FIG. 6 shows results of theoretical calculations of the relationship between the length of the atmospheric air introducing pipe and the flow rate in the experiments shown in FIG. 5. In the discharge unit 320 shown in FIG. 3B, a pressure gauge was disposed in the discharge pipe located between the atmospheric air introducing portion 322 and the discharge mechanism (vacuum pump) 321 and the pressure of the inlet of the discharge mechanism 321 was measured. By using the vacuum pump (discharge mechanism, negative pressure generating source) characteristic curve, which shows the relationship between a degree of vacuum and an air flow rate, the total flow rate was calculated as the air flow rate discharged by the discharge mechanism from the value of the pressure gauge. The flow rate on the atmospheric air introducing pipe side, i.e., the air flow rate flowing from the atmospheric air introducing pipe 323, and the air flow rate on the aspiration unit side, i.e., the amount of air flowing from the aspiration unit 310, were calculated as follows. The pressure loss in the atmospheric air introducing pipe 323 can be calculated by theoretical calculation. On the other hand, the pressure loss in the aspiration unit 310 was calculated from the results of directly connecting the aspiration unit 310 and the discharge mechanism 321 to discharge. Based on the pressure losses of the atmospheric air introducing pipe 323 and the aspiration unit 310 thus calculated, the flow rate balance was calculated to determine the flow rate on the atmospheric air introducing pipe side and the flow rate on the aspiration unit side.

From FIG. 5, it can be seen that the evaporation rate when the atmospheric air introducing pipe of 100 mm or 400 mm was connected is higher than the evaporation rate without the introducing pipe. The evaporation rate tends to decrease as the length of the atmospheric air introducing pipe increases. From FIG. 6, the total flow rate decreases as the length of the atmospheric air introducing pipe increases, which shows a similar trend to the evaporation rate. However, the breakdown of the total flow rate shows that the flow rate on the atmospheric air introducing pipe side decreases as the total flow rate decreases, while the flow rate on the aspiration unit side decreases when the atmospheric air introducing pipe of 100mm is connected compared to when the atmospheric air introducing pipe of 400mm is connected, which shows an opposite trend to the total flow rate or the flow rate on the atmospheric air introducing pipe.

FIG. 7 is a schematic diagram of a vapor aspiration by the aspiration unit 310. Once discharge is initiated by the discharge mechanism 321, the outside air flows via the through hole 312 provided in the arm 311. The inflow of the outside air via the through hole 312 generates an air flow inside the reaction vessel 116v, which causes the surface of the refined liquid 330 to fluctuate and increases the surface area of the refined liquid 330 in contact with the outside air. It is considered that this change in surface area affects the evaporation amount of the refined liquid 330. In the present example, by connecting a relatively short atmospheric air introducing pipe, a large amount of the total flow rate discharged from the discharge mechanism 321 is covered by the outside air from the atmospheric air introducing pipe, thereby reducing the flow rate on the aspiration unit side, and this is considered that the outside air flowing via the through hole 312 allows to be efficiently incorporated into the internal air flow in the vessel.

As described above, according to the present example, by changing the length of the atmospheric air introducing pipe, it is possible to adjust the inflow amount of the outside air from the aspiration unit, thereby enabling adjustment of the evaporation amount from the reaction vessel. The automatic analyzer equipped with such an evaporation and concentration mechanism may, depending on the installation environment, result in evaporation amount exceeding the designed value. Even in such cases, by switching the length and/or diameter of the atmospheric air introducing pipe, the automatic analyzer capable of obtaining the desired evaporation rate can be realized.

It should be noted that the present invention is not limited to the embodiments described above, and includes various modification examples. For example, the embodiments described above have been described in detail to simply describe the present invention, and are not necessarily required to include all the described configurations. For example, in the examples described above, an example of performing the concentration process by the heat treatment and the discharge treatment is shown, but it may be performed only by the discharge treatment. Even by only the discharge treatment, it is possible to perform the concentration process of a sample. The analyzing unit 103 may be, for example, an optical analyzer, other than a mass analyzer.

### List of Reference Signs

- 100:: automatic analyzer
- 101:: pretreatment unit
- 102:: separation unit
- 103:: analyzing unit
- 104:: control unit
- 111:: sample vessel
- 112:: conveyance mechanism
- 113:: sample dispensing mechanism
- 114:: dispensing tip detachably mounting unit
- 115:: dispensing tip mounting rack
- 115a:: dispensing tip
- 116, 116v:: reaction vessel
- 117:: reaction vessel mounting rack
- 118:: conveyance mechanism
- 119:: opening portion
- 120:: incubator
- 121:: reagent vessel
- 122:: reagent disc
- 123:: reagent dispensing mechanism
- 124:: magnetic separation mechanism
- 125:: conveyance mechanism
- 126:: rotation trajectory
- 131:: evaporation and concentration mechanism
- 132:: conveyance mechanism
- 133:: separation unit dispensing mechanism
- 201:: magnet
- 202:: a group of magnetic beads
- 203:: a group of magnetic beads
- 301:: vessel receiving unit
- 302:: vessel mounting unit
- 303:: heating unit
- 310:: aspiration unit
- 311:: arm
- 312:: through hole
- 313:: support strut
- 314:: discharge flow path
- 320:: discharge unit
- 321:: discharge mechanism
- 322:: atmospheric air introducing portion
- 323:: atmospheric air introducing pipe
- 324:: discharge pipe

## Claims

1. An evaporation and concentration mechanism for evaporating and concentrating a liquid accommodated in a reaction vessel, the evaporation and concentration mechanism comprising:
a vessel mounting unit on which the reaction vessel is placed:
an aspiration unit configured to be brought into contact with the reaction vessel so as to cover an opening of the reaction vessel; and
a discharge unit configured to discharge a gas in the reaction vessel by way of the aspiration unit, wherein
the aspiration unit includes:
a discharge flow path that has one end thereof connected to a discharge unit and the other end thereof connected to an opening of a reaction vessel due to a contact between the aspiration unit and the reaction vessel; and
a through hole that allows an outside air to flow into the reaction vessel,
the discharge unit includes:
a negative pressure generating source configured to generate a negative pressure;
a discharge pipe configured to connect the negative pressure generating source and the discharge path of the aspiration unit to each other; and
an atmospheric air introducing portion configured to introduce an atmospheric air to the discharge pipe, and
the atmospheric air introducing pipe is detachably mounted on the atmospheric air introducing portion.

2. The evaporation and concentration mechanism according to claim 1, wherein
the atmospheric air introducing pipe is configured such that the atmospheric air introducing pipe to be mounted on the atmospheric air introducing portion is selectable from a plurality of atmospheric air introducing pipes that differ from each other in length and/or in inner diameter.

3. The evaporation and concentration mechanism according to claim 1, wherein
the atmospheric air introducing portion is a branched portion of the discharge pipe or a block having a hole through which a gas passes.

4. The evaporation and concentration mechanism according to claim 1, wherein
the discharge unit includes a plurality of the atmospheric air introducing portions.

5. The evaporation and concentration mechanism according to claim 1, further comprising a heating unit that is mounted on the vessel mounting unit and is configured to heat the reaction vessel, wherein
the evaporation and concentration mechanism is configured to perform heat treatment of the reaction vessel by the heating unit and discharge treatment of a gas in the reaction vessel through the aspiration unit so as to evaporate and concentrate the liquid accommodated in the reaction vessel.

6. An automatic analyzer comprising the evaporation and concentration mechanism according to any one of claims 1 to 5, wherein
the automatic analyzer includes an analyzing unit configured to analyze a liquid accommodated in the reaction vessel that is concentrated by the evaporation and concentration mechanism.

7. The automatic analyzer according to claim 6, wherein the evaporation and concentration mechanism is connected to the atmospheric air introducing pipe that is selected in accordance with a specification of an evaporation ratio determined with respect to the evaporation and concentration mechanism.
